Europäisches Patentamt

European Patent Office

Office européen des brevets

(19)

(11) Publication number: **0 097 216**

**A1**

(12) **EUROPEAN PATENT APPLICATION**

(21) Application number: **82830185.3**

(22) Date of filing: **22.06.82**

(51) Int. Cl.³: **F 24 F 7/08**
**F 24 D 5/00, F 24 F 3/00**
**F 24 D 5/04**

(43) Date of publication of application:
**04.01.84 Bulletin 84/1**

(84) Designated Contracting States:
**AT BE CH DE FR GB IT LI LU NL SE**

(71) Applicant: **Grandi Lavori Strutture Spa**
**Via Pila 1/4**
**Pontecchio Marconi Bologna(IT)**

(72) Inventor: **Tamburini, Mario**
**Via Parmeggiani 4**
**Bologna(IT)**

(72) Inventor: **Sandro, Salvigni**
**Via Levi Civita 3**
**Bologna(IT)**

(74) Representative: **Sassatelli, Franco T.**
**c/o INIP Via Mazzini N. 170**
**I-40139 Bologna(IT)**

(54) Thermal economizer for domestic heating installations.

(57) The air ejected from rooms and heat production points, such as kitchen escape hoods (18), fumes of the heat production generators (15), is intaken and let into the economizer which regenerates its enthalpic contents. From the picking up net (2), the filtered air is first passed into a rotating recuperator and then on the evaporator of a heat pump transfering its enthalpic contents to the renewal air. This air thus preheated gets integrating thermal energy in the condenser of the heat pump and, under circumstances, also through an electrical battery.

The said air is conveyed by means of the delivery net (10) to the premises; at their entrance, it can be subsequently heated in an independent way by a hot water battery.

FIG.1

- 1 -

Thermal economizer for premises heating installations.

The invention refers to a heating system for rooms permitting to save thermal energy by means of the theorical recovering of the enthalpic contents of all premises recirculation air and additionally the direct drawing from the heat production points such as kitchen escape hoods, fumes of heat production generators, different means for producting warm water, evaporators of home refrigerators and anything similar else in this connection.

The present air heating systems for premises foresee the employ of heat sources that heat air either wholly taken in from outside or mixed with recirculation air after a previous depuration. These proceedings disperse a great part of the heat because the ejected air is warm and this heat is not recovered. Furthermore, the employ of the thermic energy at present is not foreseen which is generated on the conventional points of heat generation, getting out conventionally outwards through pipes and ventilation grates. The invented device allows the employ of both these sources of energy which otherwise would be dispersed outwards, by conveying their flux to an economizer wholly regenerating their heating power which is transferred to the renewal air: thermic energy of integration is additionally supplied by means of the heat pump and, if necessary, through an electrical battery.

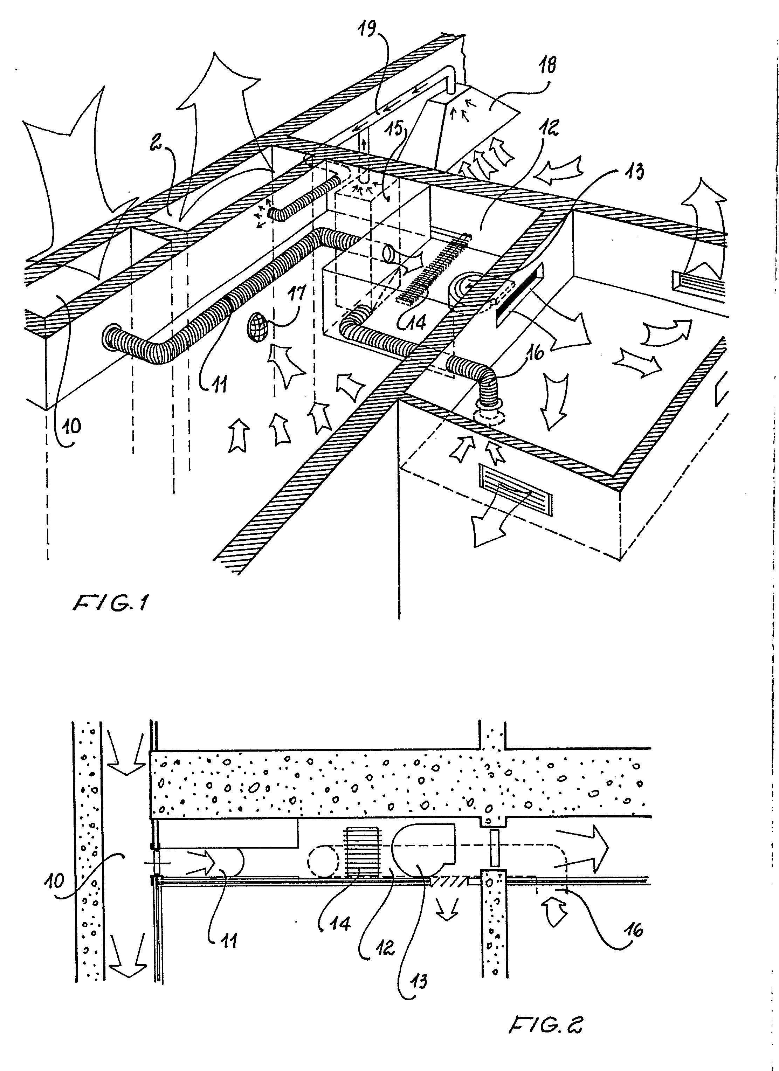

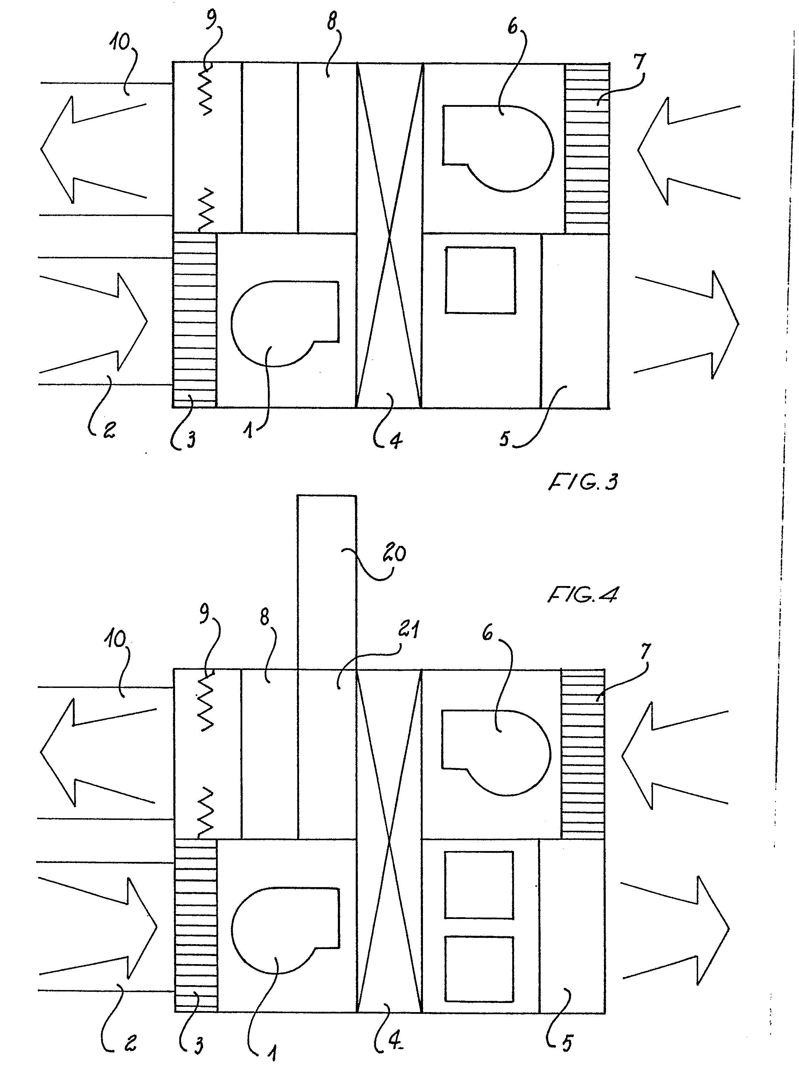

A not limiting version of execution of the proceeding and which, as such, is presented as an example, is illustrated by the drawings of Tables 1 and 2, where fig. 1 is the perspective view of the heating installation by thermoventilation in an apartment. Fig. 2 is the section of a thermoventilation devide showing the air delivery duct putting into the distribution false ceiling. Fig. 3 is a scheme of the economizer consisting of recuperator and heat pump. Fig. 4 is the scheme of another economizer consisting of recuperator and two heat pumps for special employ in cold climates.

According to the explicative version of the proceeding, the air flux drawn from the premises by means of ventilator 1 is passed into duct 2 and filtered in 3, passes in a recuperator 4 of turning type and then on evaporator 5 of a heat pump, which draws the additional energetic contents before the air is ejected practically without any enthalpic contents whatever. The renewal air is intaken by ventilator 6 after having been filtered on 7, depurated and then preheated and partially humidified in the rotating recuperator 4, and at last is heated in a system of heat pumps through condenser 8.

This hot air can be further heated by means of electrical resistance 9. At this stage, the air preheated at the project temperature is introduced through ventilator 6 into delivery vertical duct 10 in cycle prosecution. The rotating recuperator-heat pump assembly, however is destined to meet the partially the energy requirements of the building and of each premises unit. Its dimensioning, in fact, foresees that this system guarantees a nearly constant temperature of $15 \pm 1°C$. approx. in each unit, whereas the energy required for reaching higher room temperatures is supplied to each dwelling unit in an independent  way by the employ of autonomous energy sources. The said air sistem, therefore, is foreseen autonomous -centralized: autonomous for reaching and maintaining inside temperatures above 15°C. and centralized up to this temperature value.

In this way, those who do not use the flat for rather long periods of time during the day, or that are satisfied with moro modest temperatures, can perform consistent savings through disposing of an air system and, therefore, with a heat inertia null, which  permits to bring the room temperature at any moment to higher walues in a nearly instantaneous way. All those, on the contrary, who will use the dwelling unit more continuously and wish to maintain a constant temperature of 20° C., they will be able to do so without being liable to sensible "thefts of heat" since no adjacent apartment will be with an average temperature below 15°C. The air impelled into each dwelling unit from the centralized installation is then distributed into the different rooms with special ducts foreseen for this purpose by an inner ventilation system equipped with thermic integration, the location of which is in the ceiling of the bath room. The air coming from the central system is put by ducts 10 and 11 into the rooms after having passed on the system of thermal integration 12 consisting of a fan 13 with many speeds and by a battery 14 fed with water heated by the same generator 15 foressen for producing sanitary hot water. The use of the many speed ventilator, to stop during the night hours and at any rate to be controlled independently by the user, along with the system of air recirculation through duct 16 inside the dwelling unit, allows to modify the room regimen at any moment whatever and to reach a good homogenizing of temperature and ventilation at the same time.

The adoption of a thermostate, in fact, will permit to any user to choose the wished value of temperature which will be reached, maintained and paid in a quite autonomous way. With a view to pushing all energetic recuperations to the highest, the mechanical aspiration, subsequently conveyed into the bathroom false ceiling, is foreseen to have an intake, beside the one in the bathroom, also in correspondence to the hood on the cooking point in the kitchen and another on the burner of the hot water generator. From the false ceiling in the bathroom, the air is then extracted opening 17, the air from the room through the kitchen hood 18, the discharge fumes are ejected through duct 19. All that merges into duct 2 connected to the centralized economizer fitted under cover. In the case of particularly cool climates, a second heat pump is foreseen fitted on the economizer, consisting of an evaporator 20 and of a condenser 21 regenerating the enthalpic power of the outer air.

In practice, the components, the shape, the materials, the nature and compo sition of the dwelling units and anything else on order may be differently and otherwise performed.

- 1 -

Claims.

1) Thermal economizer for premises heating installations, characterized by the fact that the air ejected from rooms and heat production points, such as kitchen escape hoods, fumes of the heat production generators, is intaken and let into the economizer which regenerates its enthalpic contents. From the picking up net, the filtered air is first passed into a rotating recuperator and then on the evaporator of a heat pump transferring its enthalpic contents to the renewal air. This air thus preheated gets integrating thermal energy in the condenser of the heat pump and, under circumstances, also through an electrical battery.

2) Thermal economizer for premises heating installations, according to the previous claim, characterized by the fact the air flux drawn from the premises by means of ventilator 1 is passed into duct 2 and filtered in 3, passes inta recuperator 4 of turning type and then on evaporator 5 of a heat pump, which draws the additional energetic contents before the air is ejected practically without any enthalpic contents whatever. The renewal air is intaken by ventilator 6 after having been filtered on 7, depurated and then preheated and partially humidified in the rotating recuperator 4, and at last is heated in a system of heat pumps through condenser 8.

3) Thermal economizer for premises heating installations, according to the previous claims, characterized by the fact that this hot air can be further heated by means of electrical resistance 9.

4) Thermam economizer for premises heating installations, according to the previous claims, characterized by the fact that the air preheated at the project temperature is introduced through ventilator 6 into delivery vertical duct 10 in cycle prosecution. The rotating recuperator-heat pump assembly, however, is destinated to meet but partially the energy requirements of the building and of each premises unit. Its dimensioning, in fact, foresees that this system guarantees a nearly constant temperature of 15 ± 1°C. approx. in each unit, whereas the energy required for reaching higher room temperatures is supplied to each dwelling unit in an independent way by the employ of autonomous energy sources. The said air system, therefore, is foreseen autonomous-centralized: autonomous for reaching and maintaining insi de temperatures above 15° C. and centralized up to this temperature value.

5) Therman economizer for premises heating installations, according to the previous claims, characterized by the fact that the air impelled into dwel ling unit from the centralized installation is then distributed into the different rooms with special ducts foreseen for this purpose by an inner ventilation system equipped with thermic integration, the location of which is in the ceiling of the bath room.

6) Therman economizer for premises heating installations, according to the previous claims, characterized by the fact that the air coming from the central system is put by ducts 10 and 11 into the rooms after having passed on the system of thermal integration 12 consisting of a fan 13 with many speeds and by a battery 14 fed with water heated by the same generator 15 foressen for producing sanitary hot water.

7) Therman economizer for premises heating installations, according to the previous claims, characterized by the fact that the use of the many speed ventilator, to stop during the night hours and at any rato to be controlled independently by the user, along with the system of air recirculation through duct 16 inside the dwelling unit, allows to modify the room regimen at any moment whatever and to reach a good homogeni zing of temperature and ventilation at the same time.

8) Therman economizer for premises heating installations, according to the previous claims, characterized by the fact that the adoption of a thermostate, in fact, will permit to any user to choose the wishes va lue of temperature which will be reached, maintained and paid in a quite autonomous way.

9) Therman economizer for premises heating installations, according to the previous claims, characterized by the fact that with a view to pushing all energetic recuperations to the highest, the mechanical aspiration, subsequently conveyed into the bathroom false ceiling, is foreseen to have an intake, beside the one in the bathroom, also in correspondence to the hood on the cooking point in the kitchen and another on the burner of the hot water generator.

10) Therman economizer for premises heating installations, according to the previous claims, characterized by the fact that from the false ceiling in the bathroom, the air is then extracted through opening 17, the air from the room through the kitchen hood 18, the discharge fumes are ejected through duct 19. All that merges into duct 2 connected to the centralized economizer fitted under cover.

11) Therman economizer for premises heating installations, according to the previous claims, characterized by the fact that in the case of particularly cool climates, a second heat pump is foreseen fitted on the economizer, consisting of an evaporator 20 and of a condensor 21 regenerating the enthalpic power of the outer air.

112    0097216

FIG.1

FIG.2

212

0097216

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X,Y | FR-A-2 299 605 (BERNIER) * Figure 1; page 3, line 7 - page 4, line 7 * | 1-8 | F 24 F 7/08<br>F 24 D 5/00<br>F 24 F 3/00<br>F 24 D 5/04 |
| X,Y | DE-B-2 729 862 (DAIKIN KOGYO CO.) * Figure 1; column 4, line 42 - column 5, line 17 * | 1-8 | |
| Y | FR-A-2 188 800 (JACQUOT) * Page 3, line 37 - page 4, line 4; page 4, line 21 - page 5, line 21 * | 3,6-8 | |
| Y | DE-A-2 606 072 (PROJECTUS INDUSTRIPRODUKTER AB) * Page 6, paragraph 2 - page 7, paragraph 1 * | 4,5 | **TECHNICAL FIELDS SEARCHED (Int. Cl. ³)** |
| A | US-A-3 968 833 (STRINDEHAG et al.) * Figures 1-3, reference 7 * | 3 | F 24 D 5/00<br>F 24 D 11/00<br>F 24 F 3/00<br>F 24 F 7/00 |
| A | BE-A- 855 900 (MERRY) * Page 5, paragraph 7 - page 6, paragraph 6 * | 4 | |

The present search report has been drawn up for all claims

| Place of search BERLIN | Date of completion of the search 09-02-1983 | Examiner PIEPER C |
|---|---|---|